# EUROPÄISCHE PATENTANMELDUNG

(11) **EP 2 088 669 A2**
(43) Veröffentlichungstag der Anmeldung: **12.08.2009**
(21) Anmeldenummer: 09001746.8
(22) Anmeldetag: 08.02.2009
(51) Int. Cl.: H02P 1/32, H02P 4/00

(54) **Vorrichtung und Verfahren zum Betrieb von Maschinen an einphasigem Wechselstrom oder dreiphasigem Drehstrom zur Verarbeitung von Mörtel**

(30) Priorität: 25.07.2008 DE 102008034972; 09.02.2008 DE 102008019152
(71) Anmelder: Gerster, Karlheinz, 88400 Biberach (DE)
(72) Erfinder: Gerster, Karlheinz, 88400 Biberach (DE)

(57) **Zusammenfassung**

Die Erfindung betrifft eine Mörtel verarbeitende beziehungsweise fördernde Maschine, ***dadurch gekennzeichnet*, dass** der Drehstrom-Asynchronmotor hinsichtlich seiner Nennleistung in Kilowatt nur an Starkstromnetzen zu betreiben ist (z.B. 5,5 kW), dass motorseitig keine feste polung der Motorwicklungen auf Stern- oder Dreieckschaltung vorgenommen ist, sondern alle sechs Wicklungsanschlüsse voneinander getrennt der Schalt- und Bedienelektronik zugeführt werden, dass eine Umpolvorrichtung zum Umschalten der Motorpolungen zwischen Stern- und Dreieck nicht nur als Anlaufhilfe, sondern zum permanenten Betrieb vorgesehen ist, sowie dass eine Trennvorrichtung zur Trennung zum alternativen Stromkreis bzw. dessen Anschlussvorrichtung sowie ein Frequenzumrichter vorgesehen ist, so dass die Maschine alternativ zum Betrieb an dreiphasigen Starkstromnetzen (z.B. 380 Volt) auch über Frequenzumrichter an einphasigen Niederspannungsquellen (z.B. 230 Volt) mit unter der Nennleistung des Motors liegender Leistung (z.B. 3 kW) betrieben werden kann.

## Beschreibung

### Stand der Technik

Mörtel verarbeitende beziehungsweise bewegende Maschinen wie zum Beispiel Pumpen, Zwangsmischer, Durchlaufmischer, Putz- und Estrichmaschinen und dergleichen sind in der Regel ortsveränderliche Stromverbraucher mit großem Strombedarf. Bekannt ist der Betrieb solcher Maschinen an Niederspannungsnetzen wie den üblichen Haushaltsstromnetzen mit 50-60 Hertz Wechselstrom und 100-240 Volt. Für größeren Leistungsbedarf, zum Beispiel um weiter und höher zu fördern muss auf eine leistungsfähigere Stromversorgung wie dem Starkstromnetz mit ca. 380-400 Volt zurück gegriffen werden. Starkstrom beziehungsweise Drehstrom verfügt nicht nur über eine, sondern über drei Phasen, eine höhere Spannung und normalerweise auch über höhere mögliche Stromstärken zum Betrieb der angeschlossenen Maschinen.

Bisher waren nur Maschinen bekannt die entweder an Wechselstrom oder an Drehstrom betrieben werden konnten. Das brachte doppelte Investitionen mit sich, da eine kleine Maschine nicht immer leistungsfähig genug, große Maschinen im Einsatz nicht immer praktikabel oder Starkstromnetze nicht verfügbar waren. Daneben mussten beide Maschinen dann nicht nur angeschafft, sondern auch noch transportiert werden, was weitere Probleme mit sich brachte.

Aus DE402167A ist eine Vorrichtung bekannt, die durch ortsfest angebrachte, vorgepolte Steckverbindungen den Motor in Stern- oder in Dreieck betreibbar macht. Es geht dabei um den wirtschaftlichen Betrieb bei Abfrage von unterschiedlich starker Motorleistung bei unterschiedlichen Anwendungen in der Landwirtschaft (z.B. sechs vs. zwei kW). Die Spannungsquellen sind identisch und zwingend dreiphasig und es sind weitere Schalter direkt am Motor angebracht.

Aus DE2700116A1 ist eine Vorrichtung bekannt, die mit mindestens zwei Satz dreiphasiger Ständerwicklungen arbeitet. Das ist im Vergleich zur hier vorgeschlagenen Lösung mit einem Standard-Drehstrom-Asynchronmotor ein Sondermotor spezieller Bauform mit dadurch höheren Kosten. Durch mehrere in jeweils spezieller Position aufsteckbare Polungsstecker kann diese Vielzahl von Wicklungen durch Polumschaltung speziell verschaltet werden. Es handelt sich also um die Sonderbauform eines "polumschaltbaren" Motors mit je nach Betriebsweise unterschiedlicher Anzahl von Motorpolen, während in der erfindungsgemäß vorgeschlagenen Lösung die Anzahl an aktiven Polen des Motors fix ist (Standard sind je nach Bauweise zwei, vier oder sechs Pole) und nur zwischen Stern- und Dreieckschaltung umgepolt wird. Die Stern-/Dreieckvariation wird in der genannten Schrift ebenfalls zitiert, allerdings zum Erreichen unterschiedlicher Drehzahlen an ein und derselben Spannungsquelle. Zweck der gesamten Schrift ist das Erreichen verschiedener Drehzahlen eines Motors an ein und derselben Stromquelle ohne weitere teure Steuerungstechnik, wie z.B. Frequenzumrichter.

Aus DE1749594U ist eine Vorrichtung bekannt, mit der ein Motor durch Umpolen der Motorwicklungen durch Stern-/Dreieck-Schalter an unterschiedlichen Spannungen gestartet und auch betrieben werden kann. Voraussetzung für den Betrieb hierbei ist jedoch, dass es sich bei beiden Stromversorgungen um dreiphasige Netze handelt, da ein Betrieb eines Drehstrom-Asynchronmotors an einem einphasigen Netz nicht möglich ist. Außerdem ist die Schaltelektronik fest am Motorgehäuse verbaut.

Aus EP0226087B1 ist eine Vorrichtung bekannt, die durch einen vorgepolten Stecker vier fest vorgewählte Geschwindigkeiten ermöglicht und durch einen, den ersten ersetzenden, Stecker eine Umpolung auf Stern- oder Dreieckschaltung ermöglicht und so auch den Betrieb an unterschiedlichen Spannungen. Mit Sternschaltung an 3 x 380 Volt und mit Dreieckschaltung an 3 x 220 Volt. Besonders ist hier die Möglichkeit auch an einphasigen Netzen zu arbeiten, jedoch nur mit der leistungsschwachen "Steinmetzschaltung", die mit Hilfe eines Kondensators auch bei nur einphasiger Stromversorgung eine Hilfsphase erzeugt und so eine Drehbewegung bewirkt. Der Nachteil der Steinmetzschaltung ist, dass das Drehmoment auf 1/3 des Motor-Nennmomentes begrenzt wird. Um die gleiche Leistung zu erreichen, müsste man einen größeren Motor einsetzen, was mehr kostet und mehr Platz beansprucht. Zudem ist der Wirkungsgrad mit ca. 70 % ziemlich gering. Diese Lösung ist nicht baustellentauglich, weshalb erfindungsgemäß eine andere Lösung mit Frequenzumrichter zum Betrieb mit normal verschaltetem Drehstrommotor vorgeschlagen wird.

### Aufgabe und Vorteile der Erfindung

Aufgabe der Erfindung ist es eine Vorrichtung beziehungsweise Schaltung aufzuzeigen, mit der Mörtel verarbeitende oder fördernde Maschinen wahlweise an einphasigem Wechselstrom, beziehungsweise alternativ an dreiphasigem Drehstrom betrieben werden können. Je nach Bedarf beziehungsweise je nach verfügbarem Stromnetz kann so flexibel das Stromnetz gewählt werden, beziehungsweise kann bei Nichtverfügbarkeit von Starkstrom zumindest dennoch eingeschränkt gearbeitet werden.

Voraussetzung ist einerseits die Trennung der Stromnetzanschlüsse voneinander um Kurzschlüsse zu verhindern, andererseits müssen je nach Betriebsart des Motors gegebenenfalls die Polungen der Motorenwicklungen verändert werden. Die Erfindung geht zunächst von einer Mörtel verarbeitenden beziehungsweise fördernden Maschine mit leistungsstarkem Drehstrom-Asynchronmotor aus, der hinsichtlich seiner Nennleistung in Kilowatt (kW) nur an Starkstromnetzen zu betreiben ist. Des Weiteren ist eine Elektronikschaltung vorgesehen, die den alternativen Betrieb an einem Niederspannungsnetz zum Beispiel über einen Frequenzumrichter erlaubt, indem Sie durch Schütze den jeweils nicht gewünschten Stromkreislauf vom Motor und dem alternativen Stromkreislauf abtrennt und die Polungen der Motorenwicklung je nach Bedarf auf Sternschaltung für Starkstrombetrieb, beziehungsweise auf die Dreieckschaltung für Niederstrombetrieb verändert. Die sechs Anschlüsse der drei Motorwicklungen sind dazu nicht fest miteinander verpolt - z.B. durch angeschraubte Verbindungsplättchen - sondern werden getrennt voneinander der Schalt- und Bedienelektronik zugeführt wie in Zeichnung 1 gezeigt. Während der Motor am Starkstromnetz direkt oder indirekt über einen Frequenzumrichter bis hin zu seiner vollen Nennleistung angetrieben wird, steht beim alternativen Betrieb am Niederspannungsströmnetz nur eine unter der Nennleistung liegende Maximalleistung zur Verfügung. Ein leistungsstarker Motor von zum Beispiel 5,5 kW Nennleistung kann so nicht nur über Drehstrom betrieben werden, sondern zum Beispiel auch über Wechselstrom mit eingeschränkter Leistung von zum Beispiel 2,2 kW. Der Motor ist derselbe, lediglich das Stromnetz und die Verpolungen am Motor wurden geändert. Diese Änderungen können zum Beispiel über einen Schalter vorgenommen werden, der sinnvollerweise mit den Anschlussbuchsen für die Stromkabel, beziehungsweise deren Abdeckklappen verbunden ist. Die Abdeckungen der Anschlüsse für Stark- als auch Niederspannungsstrom sollten sich sicherheitshalber gegenseitig beim Öffnen behindern, so dass immer nur ein Stromkabel in die Maschine eingeführt werden kann. Je nachdem welcher Anschluss zugänglich ist, würde dann über den Schaltkontakt in den Abdeckklappen die jeweils andere Stromquelle über Schütze vom Motor und der alternativen Stromquelle abgetrennt und gleichzeitig die Polungen des Motors verändert werden.

Der Betrieb des Motors über Starkstrom kann wahlweise mit oder ohne Frequenzumrichter erfolgen, da netzseitig bereits dreiphasiger Drehstrom vorliegt. Alternativ kann also auf den Frequenzumrichter FU2 verzichtet werden.

Der Schalter zur Freigabe der Frequenzumrichter an den Motor kann ebenfalls entfallen, wenn die schaltenden Schütze direkt an der jeweiligen Stromquelle hängen. Nur wenn Strom anliegt wird die Stromquelle freigegeben. Hierbei ist eine mechanische Lösung wie z.B. die Abdeckung des zweiten Stromanschlusses zur Vermeidung von Kurzschlüssen beider Stromquellen anzuwenden.

Die mechanische Versperrung des alternativen Stromzuganges wird dadurch unnötig, dass die Stromnetze bzw. Ausgänge der Umrichter nicht miteinander gekoppelt werden, sondern der Motor über einen Stecker mit dem Schaltkasten verbunden werden muss und jede Stromquelle bzw. jeder Umrichter über eine eigene Buchse verfügt.

Sofern die Motorpolung zwischen Dreieck- und Sternschaltung variiert werden muss, so kann diese auch ohne Schütze über feste Verbindungen an den Steckern des jeweiligen Umrichters eingerichtet werden. Auch hier müssen die sechs Anschlüsse der drei Motorwicklungen über das Motorkabel geführt werden. Auf der Schaltschrankinnenseite sind zwischen den Anschlüssen dann mit Drähten entsprechende Verbindungen der Wicklungen realisiert, so dass je nach Anschlussbuchse eine Polung in Stern- oder Dreieckschaltung vorgenommen ist.

Die Erfindung betrifft neben diversen Ausgestaltungen zur Lösung auch das Verfahren zum Betrieb von Mörtel verarbeitenden Maschinen an Wechselstrom oder Drehstrom, dadurch gekennzeichnet, dass elektrisch oder mechanisch eine Abtrennung der Zuleitung zur jeweils alternativen Stromquelle sichergestellt und gegebenenfalls durch Schalter, Schütze oder je nach Anschlussbuchse variierender Verbindung die Polung des Motors zwischen Stern- und Dreiecksschaltung verändert wird, so dass ein Drehstrommotor mit einer Nennleistung von über 2,2 kW mit seiner vollen Leistung direkt oder über einen Frequenzumrichter an Starkstrom betrieben und derselbe Motor alternativ in Ermangelung eines solchen Netzes über einen Frequenzumrichter mit einer unter seiner originären Nennleistung liegenden Leistung auch an Niederspannungsnetzen betrieben werden kann.

### Figurenbeschreibung

Nachfolgend wird eine unvollständige Auswahl von Möglichkeiten grafisch erläutert, mit denen die zum Schutz angemeldeten Prinzipien umsetzbar sind.

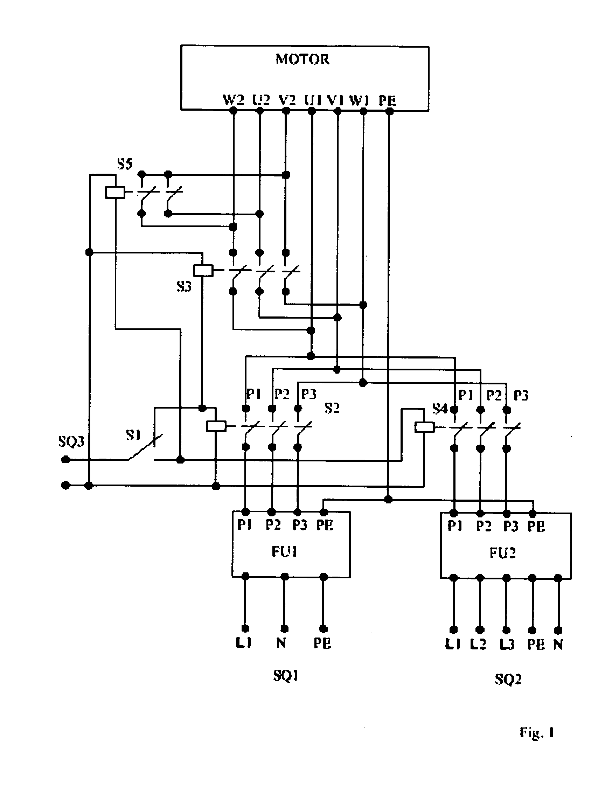

In Fig. 1 ist die Elektroschaltung aufgezeigt mit deren Hilfe ein leistungsstarker Drehstrommotor nicht nur über Starkstrom als Stromquelle 2 (SQ2), sondern alternativ auch über Wechselstrom als Stromquelle 1 (SQ1) betrieben werden kann. Die jeweiligen Stromadern L1, L2 und L3 sowie der Schutzleiter PE und der Neutralleiter N werden an die entsprechend ausgelegten Frequenzumrichter FU1 oder FU2 angeschlossen. Aus diesen treten dann die Phasen P1, P2 und P3 sowie der Schutzleiter PE wieder aus und P1-P3 werden miteinander und mit den Motorpolen über Relais beziehungsweise Schütze S2-S4 verbunden. Um Kurzschlüsse und Beschädigungen am Frequenzumrichter der jeweils gerade nicht genutzten Stromquelle zu vermeiden, werden die Verbindungen zur Schaltung durch die Schütze S2 beziehungsweise S4 entsprechend gekappt. Das geschieht zum Beispiel über einen mit den Kabeldosen der Maschine verbundenen Schalter S1 der über eine Stromquelle SQ 3 gespeist wird. Dieser registriert welche Stromquelle angeschlossen ist und sperrt die alternative Stromquelle. Im Beispiel ist dieser Schalter S1 auf 230 Volt Wechselspannung geschaltet. Er aktiviert die Schalter S2 und S3. Dadurch wird die Verbindung des stromliefernden Frequenzumrichters FU1 mit dem Motor hergestellt und die Pole U1 mit W2, V1 mit U2, W1 mit V2 verbunden und der Motor dadurch auf die Niederspannungsschaltart "Dreieckschaltung" gepolt. Die Schalter S4 und S5 schließen in dieser Konstellation nicht. Umgekehrt öffnen S2 und S3 wenn der Schalter S1 auf Starkstrom geschaltet wird. Dann wird der Frequenzumrichter FU1 aus der Schaltung genommen und stattdessen der Frequenzumrichter FU2 eingespeist. Die Schalter S4 und S5 schließen und so wird der Motor auf die "Sternschaltung" gepolt, wodurch die Pole W2, U2 und V2 miteinander verbunden werden.

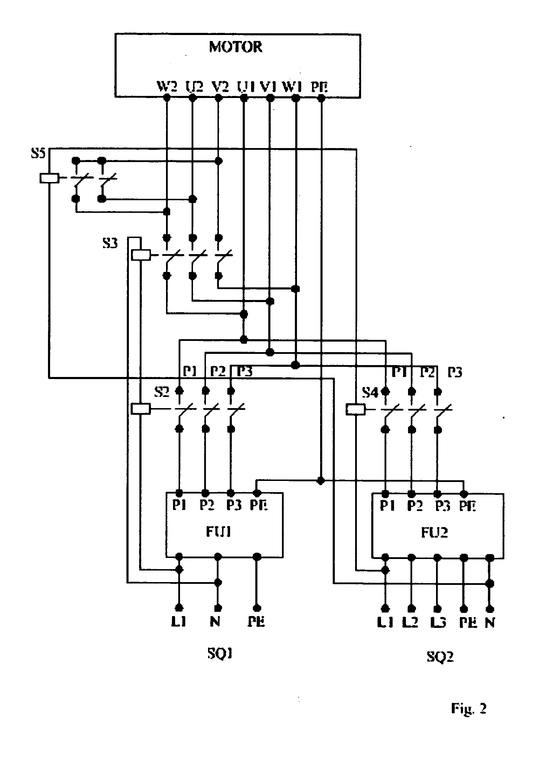

Fig. 2 zeigt eine Ausgestaltung der Schaltung, bei der zusätzlich auf den Schalter S1 aus Fig. 2 verzichtet werden kann. Ohne Stromanschluss an SQ1 oder SQ2 besteht keine Verbindung zwischen Motor und den beiden Frequenzumrichtern. Wird nun an SQ1 ein 230 Volt Wechselstrom angelegt, so wird automatisch das Relais S2 mit Strom versorgt und die Verbindung zwischen FU1 und dem Motor hergestellt. Genauso würde FU2 über das Anlegen eines 400 Volt Drehstroms an SQ2 von S4 mit dem Motor verbunden. Dazu wird einfach nur eine beliebige Phase des 400 Volt Drehstromes L1-L3 über das Relais mit dem Neutralleiter N verbunden. Einer Kollision von Wechsel- und Drehstrom durch gleichzeitigen Anschluss beider Stromquellen muss durch eine mechanische Lösung vorgebeugt werden. Hierzu eignet sich insbesondere ein vor den Stromsteckern angebrachtes Schiebeblech, das immerzu einen der beiden Anschlüsse SQ1 oder SQ2 unzugänglich und manipulationssicher abdeckt, so dass man nicht gleichzeitig beide Stromquellen an das Gerät anschliessen kann.

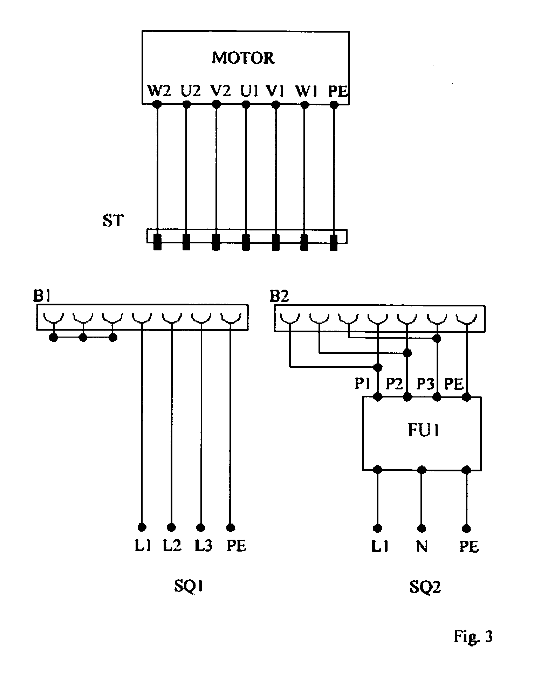

Fig. 3 zeigt die favorisierte Ausgestaltung der Vorrichtung für den Betrieb eines Motors sowohl in Dreieck- als auch in Sternschaltung. Kennzeichnend ist auch hier, dass nicht nur die drei Phasen P1-3 und der Schutzleiter PE über den Steckkontakt ST mit je einer der Stromquellenbuchsen B1/B2 verbunden wird, sondern alle sechs Anschlüsse der Motorwicklungen (U1, U2, V1, V2, W1, W2) sowie der Schutzleiter PE. Eine Polung der Motorenwicklungen ist so noch nicht vorgenommen. Wird der Stecker ST über B1 mit der Stromquelle SQ1 verbunden, so ist der Motor über die buchsenseitige Verbindung der Gegenkontakte von W2,U2 und V2 in der Sternschaltung gepolt und kann über einen Drehstromfrequenzumrichter oder auch direkt an Starkstrom mit z.B. 400 Volt betrieben werden. Wird der Motor über den Stecker ST dagegen mit der Buchse B2 der Stromquelle SQ2 verbunden so ist er durch die buchsenseitige Überbrückung der Gegenkontakte von W2 mit U1, U2 mit V1 und V2 mit W1 in der Dreieckschaltung gepolt und kann so über den Frequenzumrichter FU1 am Niederspannungsnetz mit z.B. 230 Volt betrieben werden.

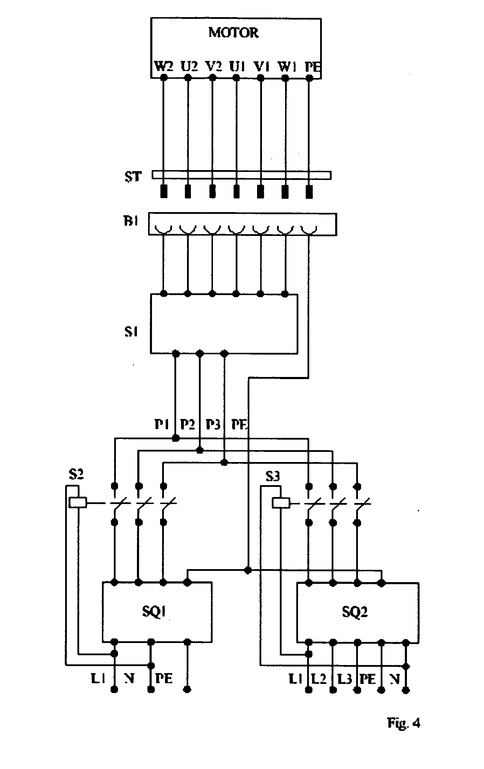

Fig. 4 zeigt eine Lösung mit Schalter wie im Verfahren beschrieben. Es kann sich dabei um eine Schalterleiste mit verschiedenen Einsätzen von Öffnern und Schließern oder einen sogenannten Stern-Dreieck-Schalter handeln. Mit beiden Varianten könnte manuell oder durch ein elektrisches Signal z.B. von einem in Fig. 1 beschriebenen Sensor an den Stromanschlüssen die Polung verändert werden. Besonders am Einsatz des Stern-Dreieckschalters ist hierbei, dass er nicht im herkömmlichen Sinn zum Start des Drehstrommotors ohne die Stromsicherung auslösende Stromspitze dient. Normalerweise wird hierbei nur mit Starkstrom gearbeitet und nach Erreichen einer gewissen Drehzahl von Dreieck in Sternschaltung umgeschaltet um die volle Leistung zu erlangen. Der Schalter wird in der gezeigten Vorrichtung jedoch nicht zum Anlaufen, sondern zum allgemeinen Betrieb an einer alternativen Spannung von z.B. 230 Volt verwendet.

### Bezugszeichenliste

- SQ1: Stromquelle 1 (Wechselstrom beziehungsweise Lichtstrom)
- SQ2: Stromquelle 2 (Starkstrom beziehungsweise Drehstrom)
- SQ3: Stromquelle 3
- L1: Leiter 1
- L2: Leiter 2
- L3: Leiter 3
- PE: Schutzleiter / "Protection Earth"
- N: Neutralleiter / Rückleiter
- FU1: Frequenzumrichter 1
- FU2: Frequenzumrichter 2
- P1: Phase 1
- P2: Phase 2
- P3: Phase 3
- S1: Schalter 1
- S2: Schalter 2 bzw. Schütz 2
- S3: Schalter 3 bzw. Schütz 3
- S4: Schalter 4 bzw. Schütz 4
- S5: Schalter 5 bzw. Schütz 5
- ST: Stecker
- U1: Motorwicklungsanschluss U1
- U2: Motorwicklungsanschluss U2
- V1: Motorwicklungsanschluss V1
- V2: Motorwicklungsanschluss V2
- W1: Motorwicklungsanschluss W1
- W2: Motorwicklungsanschluss W2
- B1: Buchse 1
- B2: Buchse 2

## Patentansprüche

1. Mörtel verarbeitende beziehungsweise fördernde Maschine, ***dadurch gekennzeichnet,* dass** der Drehstrom-Asynchronmotor hinsichtlich seiner Nennleistung in Kilowatt nur an Starkstromnetzen zu betreiben ist (z.B. 5,5 kW), dass motorseitig keine feste Polung der Motorwicklungen auf Stern- oder Dreieckschaltung vorgenommen ist, sondern alle sechs Wicklungsanschlüsse voneinander getrennt der Schalt- und Bedienelektronik zugeführt werden, dass eine Umpolvorrichtung zum Umschalten der Motorpolungen zwischen Stern-und Dreieck nicht nur als Anlaufhilfe, sondern zum permanenten Betrieb vorgesehen ist, sowie dass eine Trennvorrichtung zur Trennung zum alternativen Stromkreis bzw. dessen Anschlussvorrichtung sowie ein Frequenzumrichter vorgesehen sind, so dass die Maschine alternativ zum Betrieb an dreiphasigen Starkstromnetzen (z.B. 380 Volt) auch über Frequenzumrichter an einphasigen Niederspannungsquellen (z.B. 230 Volt) mit unter der Nennleistung des Motors liegender Leistung (z.B. 3 kW) betrieben werden kann.

2. Vorrichtung nach Anspruch 1, **dadurch gekennzeichnet, dass** die Umpolvorrichtung Schalter, insbesondere Stern-Dreieck-Schalter, beinhaltet.

3. Vorrichtung nach einem der vorhergehenden Ansprüche, **dadurch gekennzeichnet, dass** die Umpolvorrichtung Schütze beinhaltet.

4. Vorrichtung nach einem der vorhergehenden Ansprüche, **dadurch gekennzeichnet, dass** die Umpolvorrichtung zu den beiden Stromquellen vorgepolte Steckkontakte oder Zwischenstücke beinhaltet, insbesondere die Gegenstücke bzw. Buchsen zum Motorkabelstecker.

5. Vorrichtung nach einem der vorhergehenden Ansprüche, **dadurch gekennzeichnet, dass** die Trennvorrichtung zum alternativen Stromkreis Schütze beinhaltet.

6. Vorrichtung nach einem der vorhergehenden Ansprüche, **dadurch gekennzeichnet, dass** die Trennvorrichtung Schalter beinhaltet.

7. Vorrichtung nach einem der vorhergehenden Ansprüche, **dadurch gekennzeichnet, dass** die Trennvorrichtung zum alternativen Stromkreis der beiden Stromquellen vorgepolte Steckkontakte beinhaltet, insbesondere die Gegenstücke bzw. Buchsen zum Motorkabelstecker.

8. Vorrichtung nach einem der vorhergehenden Ansprüche, **dadurch gekennzeichnet, dass** die Trennvorrichtung zum alternativen Stromkreis über ein oder mehrere mechanische Abdeckbleche oder sonstige mechanische Mittel verfügt, die immer nur den Anschluss einer Spannungsquelle erlauben.

9. Vorrichtung nach einem der vorhergehenden Ansprüche, **dadurch gekennzeichnet, dass** die Umpolvorrichtung und die Trennvorrichtung eine Einheit bilden, insbesondere über eine vorgepolte Steckverbindung.

10. Vorrichtung nach einem der vorhergehenden Ansprüche, **dadurch gekennzeichnet, dass** sich die Steuerungselektronik auf zwei, jeweils spezifisch auf eine Stromquelle ausgerichtete Schaltschränke verteilt, die einander ersetzen.

11. Verfahren zum Betrieb von Mörtel verarbeitenden Maschinen an Wechselstrom oder Drehstrom, **dadurch gekennzeichnet, dass** elektrisch, statisch oder mechanisch eine Abtrennung der Zuleitung zur jeweils alternativen Stromquelle sichergestellt und gegebenenfalls durch Schalter, insbesondere sogenannte Stern-/Dreieckschalter, Schütze oder je nach Anschlussbuchse variierender Verbindung die Polung des Motors zwischen Stern- und Dreiecksschaltung verändert wird, so dass ein Drehstrom-Asynchronmotor der hinsichtlich seiner Nennleistung in Kilowatt nur an Starkstromnetzen zu betreiben ist (z.B. 5,5 kW), mit seiner vollen Leistung direkt oder über einen Frequenzumrichter an Starkstrom betrieben und derselbe Motor alternativ in Ermangelung eines solchen Netzes über einen Frequenzumrichter mit einer unter seiner originären Nennleistung liegenden Leistung auch an Niederspannungsnetzen betrieben werden kann.
